# EUROPEAN PATENT SPECIFICATION

(11) **EP 2 000 728 B1**
(45) Date of publication and mention of the grant of the patent: **11.11.2009**
(21) Application number: 06725845.9
(22) Date of filing: 29.03.2006
(51) Int. Cl.: F16L 21/04

(54) **GENERAL PURPOSE FLUID-TIGHT GASKET**
FLUIDDICHTE UNIVERSALDICHTUNG
JOINT D'ÉTANCHÉITÉ UNIVERSEL

(43) Date of publication of application: 10.12.2008
(73) Proprietor: Belgicast Internacional, S.L.U., 48100 Munguia (ES)
(72) Inventor: AZPIAZU NÚÑEZ, Jose Antonio, E-48100 Munguia (ES)
(74) Representative: Esteban Perez-Serrano, Maria Isabel
(86) International application number: PCT/ES2006/070037
(87) International publication number: WO 2007/110453

(56) References cited:
- WO-A-00/53964
- FR-A- 748 374
- FR-A1- 2 598 773
- US-A- 3 078 332
- US-A- 3 179 446
- US-B1- 6 168 210

## Description

### OBJECT OF THE INVENTION

The object of the present invention is a general-purpose fluid-tight gasket intended to produce a fluid-tight seal in the coupling of pipes it is desired to connect.

The present invention is characterized in the special configuration and design of the fluid-tight gasket, which allows a fluid-tight coupling of pipes to be obtained, in which the diameters of the pipes to be connected can vary over a wide range without needing to use a fluid-tight gasket of different diameters.

That is, with the gasket object of the invention the coupling of pipes with a wide range of diameters is possible without having to specify different fluid-tight gaskets.

Thus, the present invention lies within the ambit of the means to achieve a fluid-tight connection between different lengths of pipes, and particularly among the gaskets which allow a wide range of pipes with different diameters to be used.

### BACKGROUND OF THE INVENTION

Up to the present time, the fluid-tight gaskets used in the connection of different lengths of pipes that do not necessarily have the same diameter, are based on some of the situations in the employment of two bodies of complementary and deformable geometry. The deformation of the bodies which constitute the gasket is what allows the desired tolerance to be obtained for its application with different diameters of pipes. One of the bodies has a supporting surface which is essentially perpendicular to its axis against which surface a pressing force is applied to achieve the deformation of the gasket and thereby guarantee the fluid-tightness. This same body has another surface intended to rest on a projection of a pressing body, to prevent the egress of the gasket.

This fluid-tight gasket has the drawback of requiring the use of two independent bodies of complementary geometry.

Document US 6,168,210 discloses a fluid-tight gasket for different diameters.

On other occasions, as fluid-tight gasket for different diameters of pipes, a gasket is used formed by a single piece which is generally triangular in section, in the form of a scalene triangle. To be able to achieve its use over a wide range of diameters, it is necessary for the gasket to employ a great quantity of material, which allows sufficient deformation to be obtained to take up the tolerance sought in the different diameters.

Moreover, depending on the diameter of the pipe on which they are applied, this type of gaskets is subjected to a different deformation, which given the geometry thereof implies a different tightening torque. That is, depending on the diameter of the pipe to be connected, the tightening torque is different, becoming greater as the diameter of the pipe to connect is diminished, since the deformation of the gasket must be greater to take up the tolerance sought.

Thus, not all the screws in a set of different connections are subjected to the same tightening torque, which depends on the diameters of the pipes connected.

Therefore, the objective of the present invention is to overcome the aforesaid drawbacks, seeking on one hand, a fluid-tight gasket which besides serving for a wide range of different diameters of pipes, is formed by a single piece. Whilst on the other hand, it is sought that the quantity of material employed is reduced substantially, and wherein the tightening torque of the screws in a union is the same, independently of the diameter of the pipe to be connected.

### DESCRIPTION OF THE INVENTION

The general-purpose fluid-tight gasket of the invention is formed by a single piece of annular configuration which is trapezoidal in section.

The radial section of the fluid-tight gasket is trapezoidal in form, wherein the base of the section has some means for gripping or securing which can be implemented based on a series of semicircular projections, having also on the base a recess of approximately triangular section, which becomes narrower toward the interior of the gasket.

One of the faces of the section has an inclined face from which emerge some means of gripping or securing which can be implemented based on some semicircular projections.

The quantity of material necessary for the manufacture of the fluid-tight gasket is clearly reduced through having a recess in its base. Also, the smaller part of the section of the gasket which is proximate to the recess allows a greater deformation of the same for a smaller tightening torque.

Not only is a first compression of the fluid-tight gasket achieved by approximation of the two parts in which the gasket is separated by the recess in its base, but also a subsequent deformation of the same is possible through a progressive increase of the pressure. Thus, after the disappearance of the gap of the recess, the deformation of the gasket continues adopting a form in which it comes to be supported on part of its base, before finally in the event of further deformation suffering an expansion of the upper part.

The different forms that are adopted by the fluid-tight gasket object of the invention will depend on the diameters of the pipes to be connected, the deformation of the gasket being greater as the diameter diminishes of the pipe it is desired to connect. That is, the deformation of the gasket has to fill the gap existing between the pipe and the body of the union.

Due to the configuration that the fluid-tight gasket object of the invention has, a gasket is obtained in a single piece, which achieves a fluid-tight union applicable to a wide range of pipe diameters. The gasket would absorb the different diameters of the pipes, it is also sought that the quantity of material necessary for its fabrication is clearly reduced, and wherein the tightening torque applied for the different diameters of pipes is the same.

### DESCRIPTION OF THE DRAWINGS

To complete the description which will be mad below and with the object of assisting in a better understanding of its characteristics, the present descriptive specification is accompanied with a set of drawings in the figures of which, by way of illustration and not restrictively, the most significant details in the invention are represented.
Figure 1 shows a representation of the general-purpose fluid-tight gasket in plan view, as a section obtained on a diametrical plane and a detail of the same.
Figure 2, shows a representation of the different deformations or squashing to which the fluid-tight gasket can be subjected with the object of adapting to the different diameters of pipes used.
Figure 3, shows two representations of among the possible deformations to which the fluid-tight gasket could be subjected.

### PREFERRED EMBODIMENT OF THE INVENTION

In the light of the aforementioned figures, a preferred mode of embodiment of the invention is described below, together with the explanation of the drawings.

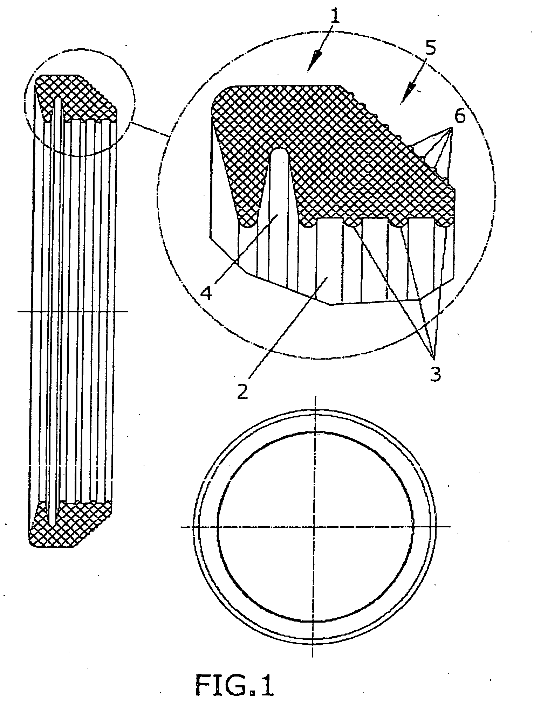

In figure 1 it can observed that the fluid-tight gasket (1) has a general annular configuration the cross-section of which is trapezoidal in form, having a lower base (2) from which emerge some projections of semicircular section (3).

In said base (2) a recess (4) is implemented of triangular general configuration which narrows toward the interior of the recess.

The trapezoidal section of the fluid-tight gasket (1) has an inclined plane (5) on one of its sides, from which some semicircular projections (6) emerge.

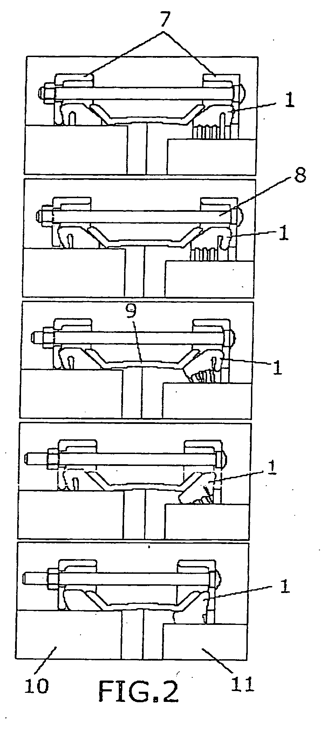

In figure 2, the progressive deformation or squashing can be observed which the fluid-tight gasket (1) suffers depending on the diameters of the pipes on which it has to be coupled, the deformation becoming greater as the diameter of the pipe is diminished.

Due to the configuration of the gasket and the different deformations that it can adopt, it is possible to overcome variations of between 25 mm and 35 mm in pipe diameter.

The fluid-tight connection between two pipes (10) and (11) is carried out by means of two tightening flanges (7) mounted on the ends of a union body (9). The union body (9) has its ends open with the object of better achieving the securing of the fluid-tight gaskets (1). The connection of the whole assembly is carried out by means of some tightening screws (8) arranged between the tightening flanges (7), so that depending on the degree to which the screw (8) is tightened, a different deformation of the fluid-tight gasket (1) is achieved, all of this with the same tightening torque which is around 35 to 40 Nm.

Firstly, for the largest diameters of pipes, represented in the upper part of figure 2, the gasket (1) hardly suffers any deformation. In the following representation the recess (4) is reduced in size, whilst in the following figures the gap of the recess has practically disappeared, the gasket coming to rest on a part of the lower base. Finally as the screw is driven in further, the gasket is deformed rising up over the base, coming to rest completely thereon.

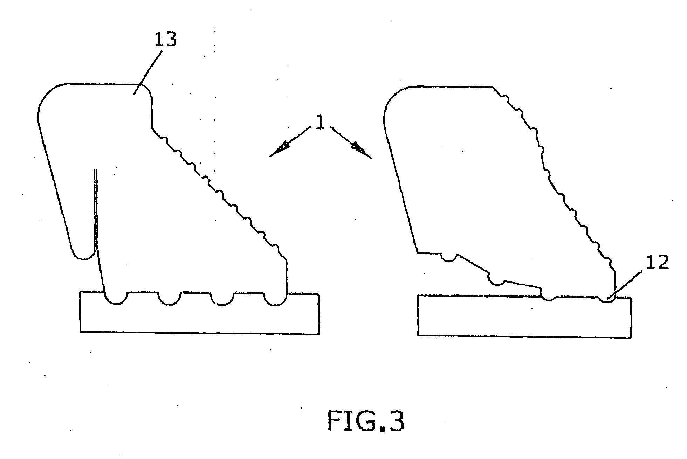

In figure 3, a first deformation of the gasket (1) can be observed in the figure on the right, wherein the fluid-tight gasket (1) is supported on its lower part on a part (12) only, whilst in the representation on the left the gasket shows a part (13) raised in relation with the rest.

It is not deemed necessary to extend this description further for an expert in the matter to comprehend the scope of the invention as defined by the appended claims and the advantages to be derived from the same.

## Claims

1. General-purpose fluid-tight gasket which has an annular configuration and which allows the use thereof for pipes of different diameters when the gasket is mounted between a tightening flange and a union body, the gasket having a trapezoidal section and on one of its sides it has an inclined face (5) with some means for gripping, **characterized in that**
- In the base (2) of the section there is a series of means for gripping (3)
- In the base (2) there is a recess (4) of triangular general configuration being narrower toward the interior of the recess

2. Fluid-tight gasket according to claim 1, **characterized in that** the means of gripping on the base are configured based on some semicircular projections (3).

3. Fluid-tight gasket according to claim 1, **characterized in that** the means of gripping that are arranged on the side face (5) are a series of semicircular projections (6).

## Patentansprüche

1. Fluiddichte Allzweckdichtung mit ringförmiger Konfiguration, die deren Verwendung für Rohre mit unterschiedlichen Durchmessern gestattet, wenn die Dichtung zwischen einem Dichtflansch und einem Verbindungskörper montiert wird, wobei die Dichtung einen trapezförmigen Querschnitt und auf einer Seite eine geneigte Fläche (5) mit Haftmitteln aufweist, **dadurch gekennzeichnet, dass**
- die Grundfläche (2) des Querschnitts mit einer Reihe von Haftmitteln (3) versehen ist,
- in der Grundfläche (2) ein Ausschnitt (4) mit allgemein dreieckiger Form angebracht ist, der sich zum Inneren des Ausschnitts hin verengt.

2. Fluiddichte Dichtung nach Anspruch 1, **dadurch gekennzeichnet, dass** die Haftmittel an der Grundfläche auf der Grundlage halbkreisförmiger Vorsprünge (3) konfiguriert sind.

3. Fluiddichte Dichtung nach Anspruch 1, **dadurch gekennzeichnet, dass** die auf der Seitenfläche (5) angeordneten Haftmittel aus einer Reihe halbkreisförmiger Vorsprünge (6) bestehen.

## Revendications

1. Joint étanche au fluide universel qui a une configuration annulaire et qui permet son utilisation pour des tuyaux de différents diamètres lorsque le joint est monté entre une bride de serrage et un corps d'union, le joint ayant une section trapézoïdale et il a sur un de ses côtés une face inclinée (5) avec quelques moyens de préhension, **caractérisé en ce que :**
- sur la base (2) de la section il y a une série de moyens de préhension (3),
- sur la base (2) il y a un évidement (4) à configuration générale triangulaire étant plus étroite vers l'intérieur de l'évidemment.

2. Joint étanche au fluide selon la revendication 1**, caractérisé en ce que** les moyens de préhension sur la base sont configurés basés sur quelques projections semi-circulaires (3).

3. Joint étanche au fluide selon la revendication 1**, caractérisé en ce que** les moyens de préhension qui sont disposés sur la face latérale (5) sont une série de projections semi-circulaires.
